# EUROPEAN PATENT SPECIFICATION

(11) **EP 1 840 022 B1**
(45) Date of publication and mention of the grant of the patent: **03.03.2010**
(21) Application number: 06425218.2
(22) Date of filing: 29.03.2006
(51) Int. Cl.: B62M 3/00

(54) **Bicycle pedal crank assembly and related elements**
Fahrradkurbelarmzusammenbau und relatierte Elemente
Assemblage de manivelle de bicyclette et les éléments liés

(43) Date of publication of application: 03.10.2007
(73) Proprietor: CAMPAGNOLO S.r.l., 36100 Vicenza (VI) (IT)
(72) Inventor: Valle, Maurizio, 36100 Vicenza (IT)
(74) Representative: Riccardi, Elisa

(56) References cited:
- EP-A- 1 442 974
- FR-A- 2 416 829
- US-A- 4 811 626
- US-A1- 2004 177 717

## Description

The present invention refers to a bicycle pedal crank assembly, a pedal crank, and a reinforcing element for a bicycle pedal crank.

FR-A-2426829 which constitutes the closest prior art and US-A-4811626 each disclose a pedal crank having a hole and an element inserted in the hole for an axle of a pedal.

Bicycle pedal cranks have a weak point in the areas for coupling with the pedal and for coupling with the bottom bracket, where they have a hole for receiving an axle of the pedal or respectively of the bottom bracket. The hole is typically threaded or in any case with a non-smooth wall to prevent the mutual rotation between the pedal crank and the axle, for example it has a polygonal cross-section, in particular square or hexagonal, or else it is a cylindrical or conical hole having grooves or protrusions.

What these types of hole have in common is an inner surface with sharp direction changes, at which the stresses are concentrated and fractures begin. The fractures, when the pedal crank is subject to repeated loads, like during pedalling, expand without the cyclist having the possibility of noticing it. When the resistant cross-section of the pedal crank has been reduced to the point of no longer being sufficient to bear the load of pedalling, it suddenly breaks, with a serious risk to the cyclist's safety. This type of break is known as a fatigue break.

The technical problem at the basis of the present invention is to make bicycle pedal cranks safer, in particular increasing their fatigue lifetime.

The invention as disclosed by the features of independent claims 1, 28, 41 concerns, in a first aspect thereof, a bicycle pedal crank assembly comprising a pedal crank having a first end for coupling with a bottom bracket and a second end for coupling with a pedal, at least one of said first end and said second end comprising a hole extending from one side - distal or proximal, respectively - of the pedal crank for coupling with an axle of the pedal or of the bottom bracket, respectively, comprising a reinforcing element or washer extending around the hole in the proximity of or at said side of the pedal crank, having a portion configured for receiving an abutment portion of said axle resting upon it, the pedal crank and the reinforcing element contacting along a respective surface not entirely contained within a plane perpendicular to an axis of the hole, and, in the direction of the axis, the extent of said mutual contact surfaces being shorter than half the extent of the hole.

The Applicant has perceived that the main cause of fatigue breaking of the pedal cranks is tensile stress that occurs in the area around the hole when the cyclist pushes on the pedals.

The Applicant has also noted that the maximum tensile stress occurs in the surface area of the hole, on the side from which the axle of the pedal or of the bottom bracket protrudes.

In the pedal crank assembly according to the invention, thanks to the friction forces arising at the mutual contact surfaces of the pedal crank and the reinforcing element, the latter is able to absorb a part of the stresses in said surface area of the hole, straining with the pedal crank and taking the load off the pedal crank. In this way the residual tensile stress in the pedal crank is no longer enough to start and propagate the fractures at the direction changes of the surface of the hole, and the use of the pedal crank is safer.

Preferably, the mutual contact surfaces have an overall sloping progression with respect to said axis, so that the friction forces are more distributed in the body of the reinforcing element.

In the present description and in the attached claims, by overall sloping progression it is meant to indicate contact surfaces that can locally depart from a conical surface.

Typically, the surface of the hole at least in the portion in the proximity of the reinforcing element is a surface with a non-smooth wall. The axle is thus effectively held at least in the area of maximum stress.

In the direction of the axis of the hole, preferably the mutual contact surfaces have an extent less than a fifth of the extent of the hole. In this way the overall weight of the pedal crank is reduced.

In a particularly preferred way, in the direction of the axis the extent of the mutual contact surfaces is comprised between one pitch of an inner threading of the hole and twice the pitch.

According to a particularly preferred characteristic of the pedal crank assembly of the present invention, the reinforcing element has a greater modulus of elasticity than that of the pedal crank, so that it is able to absorb a substantial portion of tensile stress of the pedal crank.

Preferably, but not limited thereto, the material used to make the reinforcing element with the desired modulus of elasticity is selected among steel, titanium alloy and aluminium alloy.

In first embodiments, the mutual contact surfaces are conical surfaces.

In this case, the friction forces act upon many planes perpendicular to said axis and continually arranged one adjacent to the other, substantially for the entire extent of the conical contact region. The friction action is therefore exerted uniformly throughout the body of the reinforcing element.

Preferably, the generating line of the mutual contact surfaces is sloping with respect to a plane perpendicular to the axis by an angle comprised between 5° and 45°, and preferably comprised between 25° and 35°.

In order to increase more the area of the mutual contact surfaces of the pedal crank and the washer and therefore the friction forces, the mutual contact surfaces can be rotational surfaces having a curvilinear generating line with two or more inflexion points, rotational surfaces having a curvilinear generating line with one inflexion point, rotational surfaces having an arc of circumference-shaped generating line, rotational surfaces having a stepped generating line or other surfaces, for example deriving from the combination of the above.

The mutual contact surfaces of the pedal crank and the washer can also not be rotational surfaces, for example multi-faceted surfaces and preferably frustum of pyramid-shaped surfaces.

In the above embodiments as well as in others, the contact surface of the reinforcing element can overall converge towards the pedal crank and the contact surface of the pedal crank can overall diverge towards the reinforcing element, or vice-versa the contact surface of the reinforcing element can overall diverge towards the pedal crank and the contact surface of the pedal crank can overall converge towards the reinforcing element.

The pedal crank can comprise a recessed seat for housing the reinforcing element.

The pedal crank can alternatively comprise a protruding seat for housing the reinforcing element.

Preferably a mechanical constraint is further provided between the pedal crank and the reinforcing element, so that the mutual sliding thereof is minimized if not nullified. The reinforcing element or washer is thus strained even more as a single piece with the pedal crank, and its efficiency increases.

The mechanical constraint can comprise a caulking, in particular a caulking of the pedal crank and/or of the reinforcing element around said recessed or protruding seat.

When the pedal crank is made from a composite material, said mechanical constraint can be accomplished by co-moulding of the reinforcing element in the pedal crank.

The mutual contact surfaces between the pedal crank and the reinforcing element can have a different extent at different angular positions about the axis.

Since the force that the cyclist exerts on the pedal changes in strength during the pedalling cycle and thus as a function of the angular position of the pedal crank assembly, with the above provision it is possible to modify the mutual contact surfaces so as to increase the friction during the portion of the pedalling cycle when the greatest force is exerted compared to the portion of the pedalling cycle when the smallest force is exerted.

In an embodiment, the mutual contact surfaces of the pedal crank and the reinforcing element are eccentric surfaces with respect to the hole.

Preferably, in this case the axis of the mutual contact surfaces is parallel to the axis of the hole and defines therewith a plane sloping with respect to a longitudinal centre line of the pedal crank by an angle comprised between 30° and 70°.

In another embodiment, the mutual contact surfaces of the pedal crank and the reinforcing element have a different slope at different angular positions about the axis.

In a second aspect thereof the invention concerns a bicycle pedal crank having a first end for coupling with an axle of the bottom bracket and a second end for coupling with a pedal, at least one of said first end and said second end comprising a hole extending from one side - distal or proximal, respectively - of the pedal crank for coupling with an axle of the pedal or of the bottom bracket, respectively, comprising, in the proximity of or at said side, a surface configured for contacting a reinforcing element, said contact surface being not entirely contained in a plane perpendicular to an axis of the hole and having an extent, in the direction of the axis, shorter than half the extent of the hole.

The pedal crank preferably has one or more of the features described above in connection with the pedal crank assembly.

In a third aspect thereof the invention concerns a reinforcing element for a bicycle pedal crank, characterised by comprising a hole configured for allowing passage of an axle of the pedal or of the bottom bracket, respectively, a portion configured for receiving an abutment portion of the axle resting upon it, and a surface not entirely contained within a plane perpendicular to an axis of the hole, said surface configured for contacting the pedal crank, the extent of said contact surface being shorter than half the extent of the hole of the pedal crank when available.

The reinforcing element preferably has one or more of the features described above in connection with the pedal crank assembly.

Further characteristics and advantages of the present invention shall become clearer from the following detailed description of some preferred embodiments thereof, made with reference to the attached drawings, purely as a nonlimiting example. In the drawings:
- figure 1 is a partially sectional side view of a pedal crank assembly according to the present invention coupled with the axle of a pedal;
- figure 2 is an enlarged cross-section of a part of the coupling area between the pedal crank assembly and the axle of figure 1;
- figure 3 is an enlarged cross-section of a part of the pedal coupling area of the pedal crank assembly of figure 1, wherein the forces acting on a reinforcing element thereof are schematically shown;
- figure 4 is a plan view of the pedal crank of the pedal crank assembly of figure 1, wherein the forces acting on the reinforcing element are schematically shown;
- figures 5 to 11 are sections of the pedal coupling area of pedal crank assemblies according to other embodiments of the present invention;
- figure 12 is a cross-section of the pedal coupling area of a pedal crank assembly according to another embodiment of the present invention;
- figure 13 is an enlarged cross-section of the coupling area between the washer and the pedal crank of the pedal crank assembly of figure 12;
- figure 14 is a cross-section of the pedal coupling area of a pedal crank assembly according to another embodiment of the present invention;
- figure 15 is a cross-section of the pedal coupling area of a pedal crank assembly according to another embodiment of the present invention, wherein the mutual contact surfaces of the pedal crank and the washer have a different extent at different angular positions;
- figure 16 is a plan view of the pedal crank of the pedal crank assembly of figure 15;
- figure 17 is a section of the pedal coupling area of pedal crank assembly according to another embodiment of the present invention, wherein the mutual contact surfaces of the pedal crank and the washer have a different extent at different angular positions; and
- figure 18 is a partial perspective view of a pedal crank assembly according to another embodiment of the present invention.

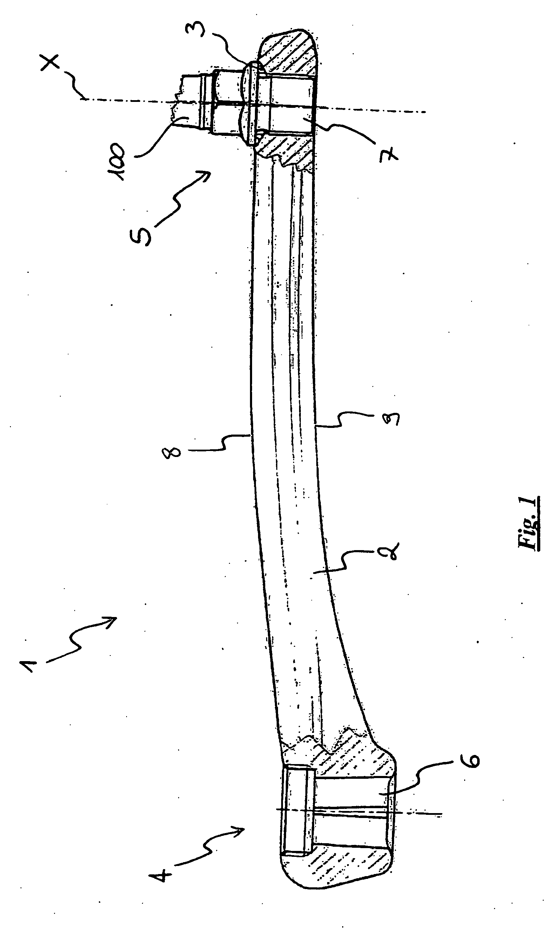

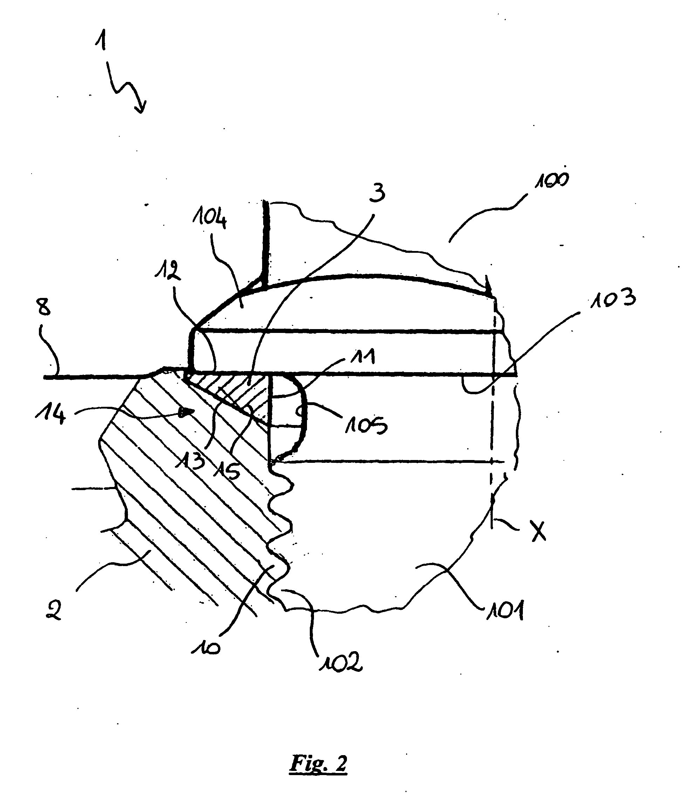

With reference to figures 1 to 4, a pedal crank assembly 1 according to a first embodiment of the invention comprises a pedal crank 2 and at least one reinforcing element or washer 3.

The pedal crank 2 can be made from metallic material, typically light alloys like aluminium alloys, or else from composite material. The composite material used preferably comprises structural fibres embedded in a polymeric material. Typically, the structural fibres are selected from the group consisting of carbon fibres, glass fibres, aramidic fibres, ceramic fibres, boron fibres and combinations thereof, carbon fibres being preferred. Preferably, the polymeric material of the pedal crank is thermosetting, but it could be a thermoplastic material. More preferably, the polymeric material comprises an epoxy resin.

The washer 3 is made from a material with a greater modulus of elasticity than the modulus of elasticity of the material of the pedal crank 2. Preferably, the washer 3 is metallic and even more preferably it is made from a material selected among steel, titanium alloys and aluminium alloys, the same as or different from those of the pedal crank 2.

The pedal crank 2 has a first end 4 for coupling with the axle of a bicycle bottom bracket (not shown) and a second end 5 for coupling with an axle 100 of a pedal (not shown).

The first end 4 of the pedal crank 2 comprises a hole 6 in which, in use of the pedal crank, the axle of the bicycle bottom bracket (not shown) is inserted.

The second end 5 of the pedal crank 2 comprises a hole 7, having an axis X, in which, in use of the pedal crank, the axle 100 is inserted. The hole 7 extends in the body of the pedal crank 2 from the distal side 8 of the pedal crank 2, with reference to the centre of the bicycle. In the illustrated embodiment, the hole 7 extends up to the proximal side 9 of the body of the pedal crank 2, with reference to the centre of the bicycle. In other words, in the illustrated embodiment the hole 7 is a through hole made in the pedal crank 2, but in alternative embodiments it could be a blind hole.

The hole 7 of the illustrated embodiment is a cylindrical hole having an internal threading 10 having a pitch P, but it could alternatively be a hole with polygonal, in particular square or hexagonal, cross-section, a cylindrical or conical hole having grooves or protrusions, or a hole configured in another way to prevent the mutual rotation of the axle 100 and of the pedal crank 2 about axis X, at least in a portion in the proximity of the distal side 8 of the pedal crank 2 and therefore in the proximity of the washer 3.

The washer 3 extends around the hole 7 at the distal side 8 of the pedal crank 2.

The washer 3 has a hole 11 of a shape and size matching the cross-section of the hole 7 of the pedal crank 2, or such as to include it, to allow the insertion of the axle 100. The hole 11 has an axis coinciding with axis X.

The washer 3 has a first substantially flat surface 12 and a second surface 13 substantially opposite surface 12.

The second surface 13 of the washer 3, for contacting the pedal crank 2, is a conical surface, having its axis coinciding with the axis X.

The pedal crank 2 has a seat 14 for receiving the washer 3, of a shape matching the shape of the washer 3, and in particular having a conical surface 15 for contacting the washer 3, with its axis coinciding with the axis X.

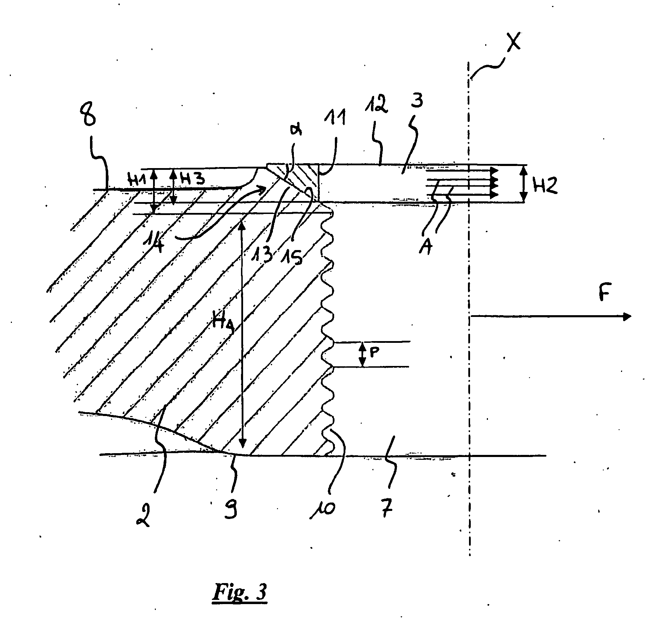

In the direction of axis X, the seat 14 of the pedal crank 2 has an extent H1 and the washer 3 has an extent H2, the contact zone between the pedal crank 2 and the washer 3 has an extent H3 and the hole 7 has an extent H4. It should be noted that, although in figure 3 the washer 3 slightly protrudes outside of the seat 14, it could alternatively be flush with the outer edge of the seat 14, and thus H3 would be substantially equal to H2, or else the washer 3 could be housed beneath the outer edge of the seat 14.

The extents H1, H2 and H3 are preferably less than the extent H4 of the hole 7, more preferably less than half the extent H4 of the hole 7, even more preferably less than one fifth of the extent H4.

Moreover, in the most preferred embodiment, said extents H1, H2 and H3 are comprised between one and two pitches P of the threading 10 of the hole 7.

Preferably, moreover, the conical surface 15 of the seat 14 of the pedal crank 2 and the conical surface 13 of the washer 3, respectively, are sloping with respect to a plane perpendicular to the axis X of the hole 7 of the pedal crank 2 and of the hole 11 of the washer 3, respectively, by an angle α comprised between 5° and 45° and even more preferably comprised between 25° and 35°.

As stated, in use a pedal is coupled with the pedal crank assembly 1 through the axle 100.

The axle 100 has an end portion 101 configured for passing in the hole 11 of the washer 3 and for coupling in the hole 7 of the pedal crank 2.

In the illustrated embodiment, the end portion 101 of the axle 100 has a threading 102 matching the internal threading 10 of the hole 7 of the pedal crank 2. In other embodiments the end portion 101 of the axle 100 could have a polygonal cross-section or could be equipped with ridges or grooves, matching the cross-section of the hole 7 of the pedal crank 2.

The axle 100 also has an abutment surface 103, typically made in a flange 104 thereof.

It should be noted that in the illustrated embodiment, the axle 100 also has a peripheral throat 105 arranged between the abutment surface 103 and the end portion 101, so that the inner wall of the hole 11 of the washer 3 does not contact the axle 100, but in alternative embodiments the throat 105 could be missing, the inner wall of the hole 11 of the washer 3 contacting the axle 100.

The Applicant believes that the good performance of the pedal crank assembly 1 according to the invention can be explained as follows.

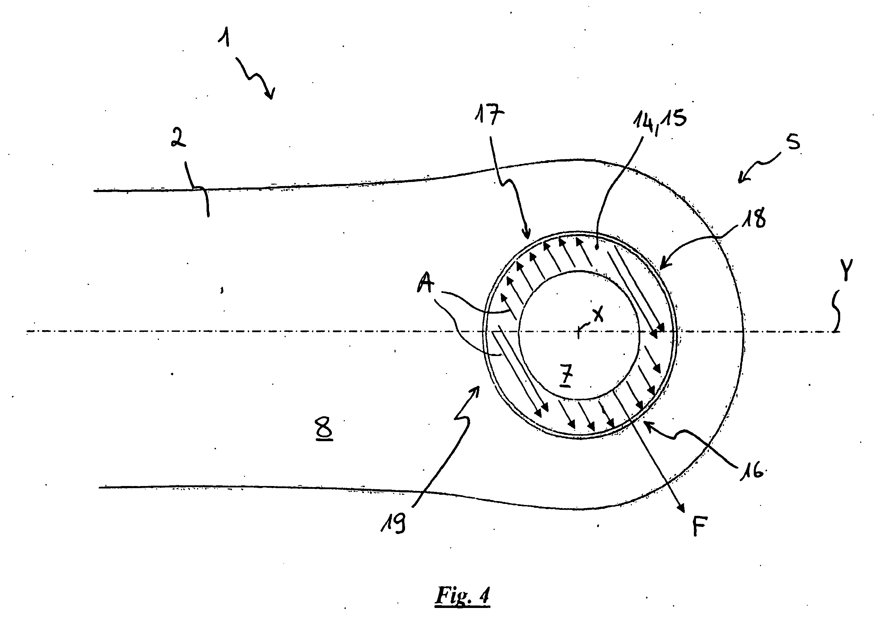

When the end portion 101 of the axle 100 is screwed into the hole 7 of the pedal crank 2, the abutment surface 103 goes into abutment onto the substantially flat surface 12 of the washer 3.The thrust of axle 100 onto the washer 3 creates friction forces A (figures 3 and 4) that oppose the mutual sliding of the contact surfaces 13 and 15.

In use of the bicycle, when the cyclist pushes on the pedals, the axle 100 further transmits a tensile force to the pedal crank 2, at the hole 7.

In the most critical condition, wherein the cyclist exerts the maximum thrust on the pedal, the longitudinal axis Y of the pedal crank is sloping by about 45° with respect to the horizontal, with the second end 5 above the horizontal passing through the axle of the bottom bracket, and the force exerted by the cyclist is transferred onto the pedal crank 2 substantially in the direction of the arrow F illustrated in figures 3 and 4, sloping by about 45° with respect to the longitudinal centre line Y of the pedal crank 2. In the present description, for the sake of simplicity, the force component in the plane perpendicular to the middle plane of the pedal crank 2 (plane perpendicular to the plane of figure 4) and the moment of the force F or torque are neglected.

The region 16 of the second end 5 of the pedal crank 2 adjacent to the force F is therefore subject to a tensile force, whereas the opposite region 17 with respect to the axis X of the hole 7 is not subject to any tensile force. The pedal crank 2 is therefore subject to a tensile load, which tends to induce an elastic elongation at the regions 18 and 19 extending between the regions 16 and 17. In other words, the hole 7 of the pedal crank 2 has, in use thereof, the tendency to "become oval".

Due to the repeated load cycles during pedalling, there is the risk of cracks in the throats of the threading 10 of the hole 7 - or of the other sharp direction changes of the wall of the hole 7 -, especially in the proximity of the distal side 8 of the pedal crank 2, and of consequent breaking by fatigue of the pedal crank 2.

The mutual contact surfaces 13, 15 of the pedal crank 2 and the washer 3 made conical allow the washer 3 to strain or "become oval" together with the pedal crank 2, and to absorb part of the tensile force, reducing the aforementioned risks. This is because the friction forces acting in the direction of the arrows A between the mutual contact surfaces 13 and 15 prevent the mutual sliding between the pedal crank 2 and the washer 3. More specifically, in the regions 16, 18 and 19 the friction forces A draw the corresponding region of the washer 3 into elongation as a single piece with the pedal crank 2, whereas in the region 17 the friction forces A hold the corresponding region of the washer 3, opposing its sliding on the pedal crank 2.

In particular, thanks to the modulus of elasticity of its constituent material that is greater than the modulus of elasticity of the constituent material of the pedal crank 2, the washer 3 absorbs a substantial part of the tensile stress in the surface region of the hole 7.

Moreover as highlighted in figure 3, the friction forces A act upon many planes perpendicular to the axis X, substantially for the entire extent H3 of the contact region between the pedal crank 2 and the washer 3. The holding and the drawing into tension actions of the washer 3 are therefore distributed substantially along its entire extent H2 and therefore in its entire body, increasing the portion of tensile stress absorbed by the washer 3 itself.

Similarly, the change in the cross-section of the seat 14 spreads the stresses in the pedal crank 2 over a greater region of material compared with the case of flat contact surface perpendicular to axis X. The absolute value of the local stresses is therefore low.

Since the maximum values of the local stresses in the pedal crank 2 are smaller, both because of their better distribution and because they are absorbed by the washer 3, the risk of cracks starting on the distal side 8 at the hole 7 is reduced and therefore the fatigue lifetime of the pedal crank 2 is increased.

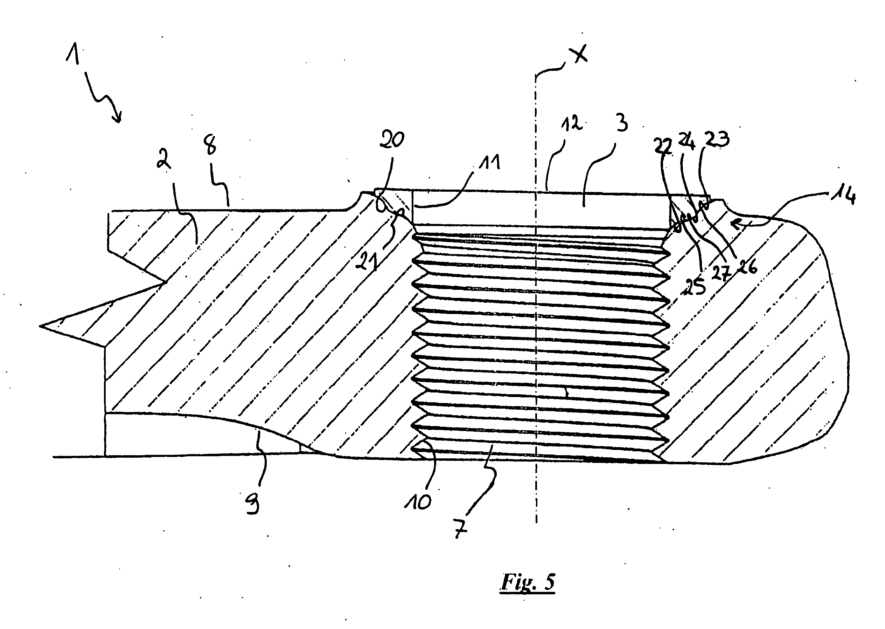

Figures 5 to 9 represent alternative embodiments of the pedal crank assembly 1, wherein the mutual contact surfaces of the pedal crank 2 and the washer 3 are of increased area compared with the case of the embodiment described above, and therefore the friction forces A are advantageously further increased.

In particular, figure 5 shows a pedal crank assembly 1 wherein the mutual contact surfaces 20, 21 of the washer 3 and of the pedal crank 2, respectively, are rotational surfaces having a curvilinear generating line with two inflexion points. More specifically, the generating line of the contact surface 20 of the washer 3 has two concave portions 22, 23 and a convex portion 24 between them, and the generating line of the contact surface 21 of the pedal crank 2 has two convex portions 25, 26 and a concave portion 27 between them.

Mutual contact surfaces that are rotational surfaces with a generating line having more than two inflexion points can also be used.

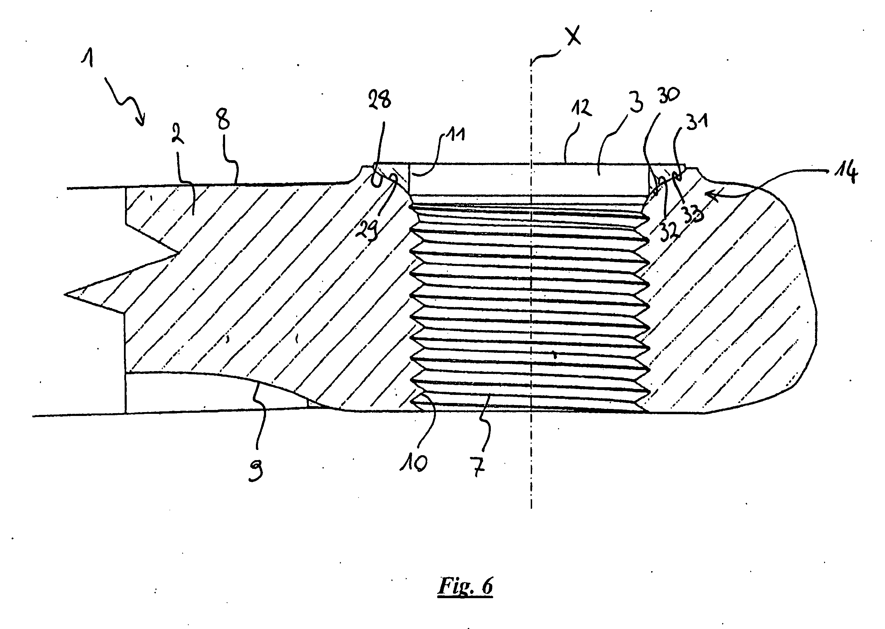

Figure 6 shows a pedal crank assembly 1 wherein the mutual contact surfaces 28, 29 of the washer 3 and of the pedal crank 2, respectively, are rotational surfaces having a curvilinear generating line with one inflexion point. More specifically, the generating line of the contact surface 28 of the washer 3 has a concave portion 30 and a convex portion 31, and the generating line of the contact surface 29 of the pedal crank 2 has a convex portion 32 and a concave portion 33.

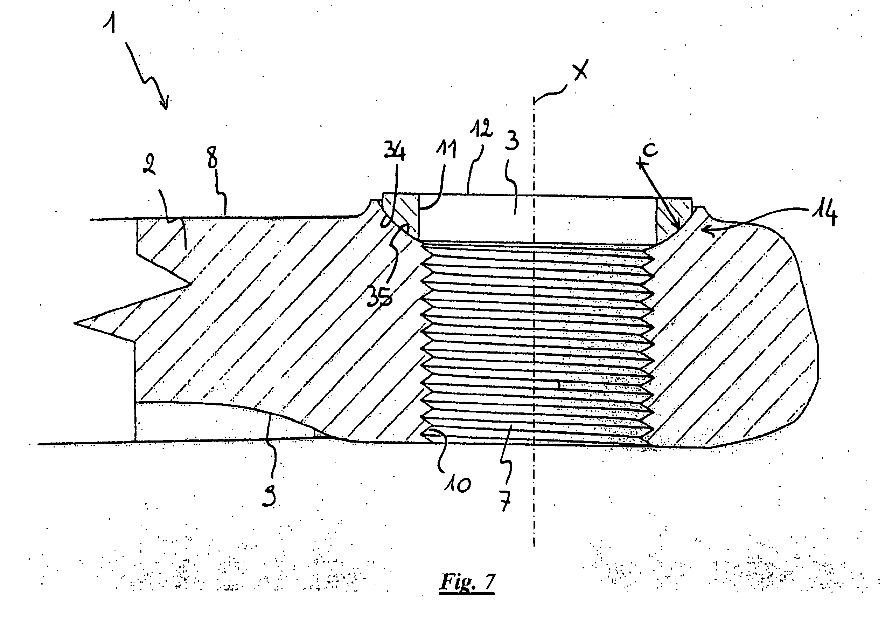

Figure 7 shows a pedal crank assembly 1 wherein the mutual contact surfaces 34, 35 of the washer 3 and of the pedal crank 2, respectively, are rotational surfaces having an arc of circumference-shaped generating line. More specifically, the generating line of the mutual contact surface 34 of the washer 3 is convex, and the generating line of the contact surface 35 of the pedal crank 2 is concave. The centre C of the arc of circumference does not lie on the axis X, but this possibility is also not ruled out, in which case the surfaces 34, 35 would be spherical.

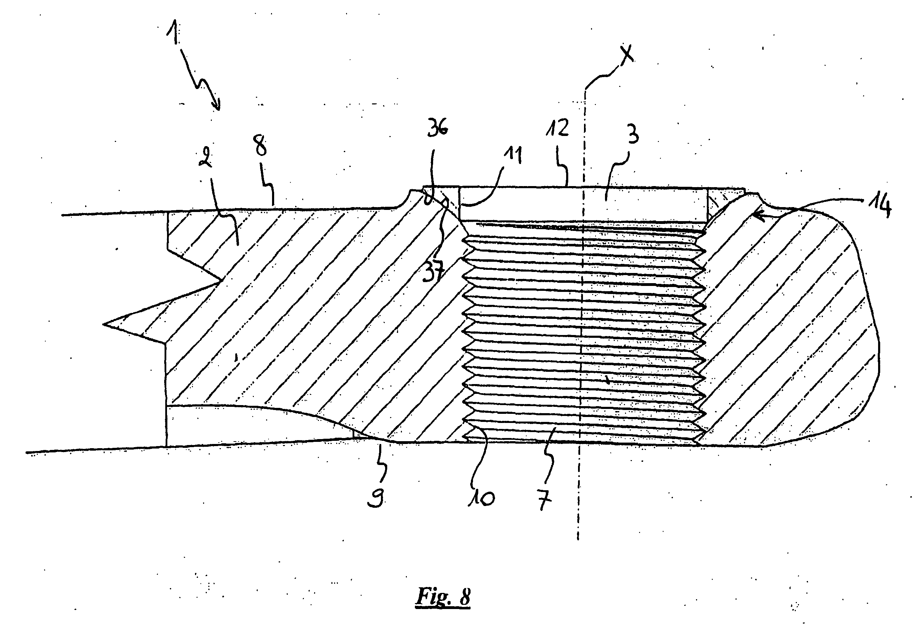

Figure 8 also shows a pedal crank assembly 1 wherein the mutual contact surfaces 36, 37 of the washer 3 and of the pedal crank 2, respectively, are rotational surfaces having an arc of circumference-shaped generating line. In this case, the generating line of the contact surface 36 of the washer 3 is concave and the generating line of the contact surface 37 of the pedal crank 2 is convex.

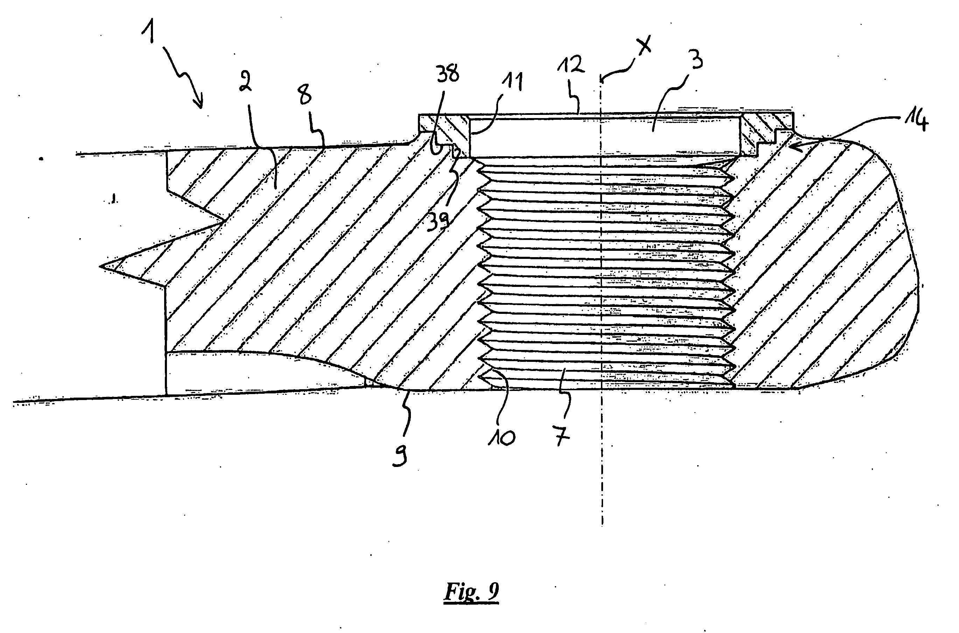

Figure 9 shows a pedal crank assembly 1 wherein the mutual contact surfaces 38, 39 of the washer 3 and of the pedal crank 2, respectively, are rotational surfaces having a stepped generating line. Although three steps are illustrated, rotational surfaces having a generating line with two, four or more steps can be used.

In the above described embodiments, the mutual contact surfaces of the pedal crank 2 and the washer 3 have an overall sloping progression with respect to the axis X of the hole 7. More specifically, the contact surface of the washer 3 overall converges towards the pedal crank 2, and the contact surface of the pedal crank 2 overall diverges towards the washer 3.

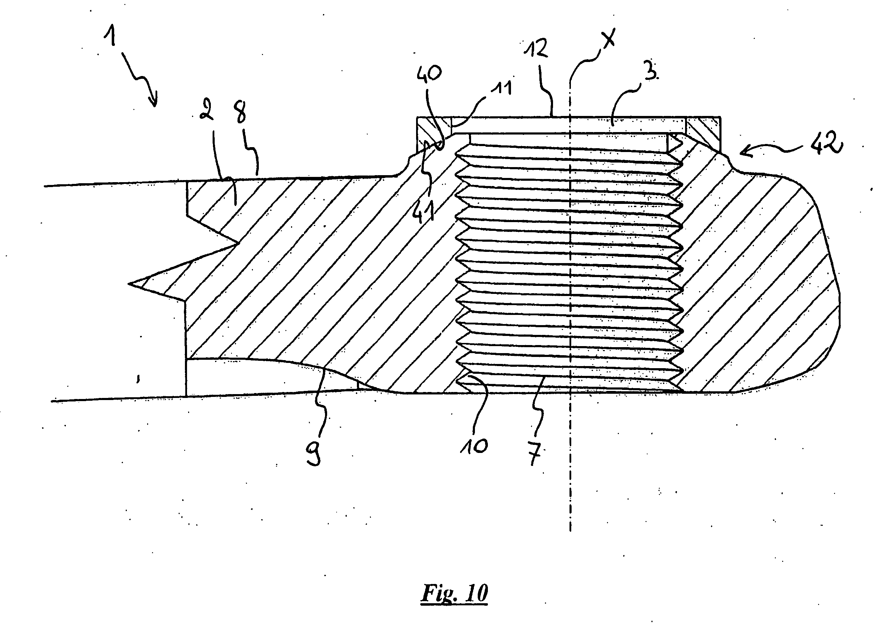

Figure 10 shows a pedal crank assembly 1 wherein the mutual contact surfaces 40, 41 of the washer 3 and of the pedal crank 2, respectively, have an overall sloping progression with respect to the axis X of the hole 7, but with opposite orientation with respect to the above described embodiments. In particular, the contact surface 40 of the washer 3 overall diverges towards the pedal crank 2, and the contact surface 41 of the pedal crank 2 overall converges towards the washer 3. The mutual contact surfaces 40, 41 are more specifically conical, but they could alternatively be surfaces similar to those described above with reference to figures 5 to 9.

The contact surface 41 of the pedal crank 2 is also made in a seat 42 protruding from the distal side 8 of the pedal crank 2.

It should be understood that also in the other described embodiments, the seat 14 recessed into the pedal crank 2 for receiving the washer 3 can be replaced by a protruding seat 42.

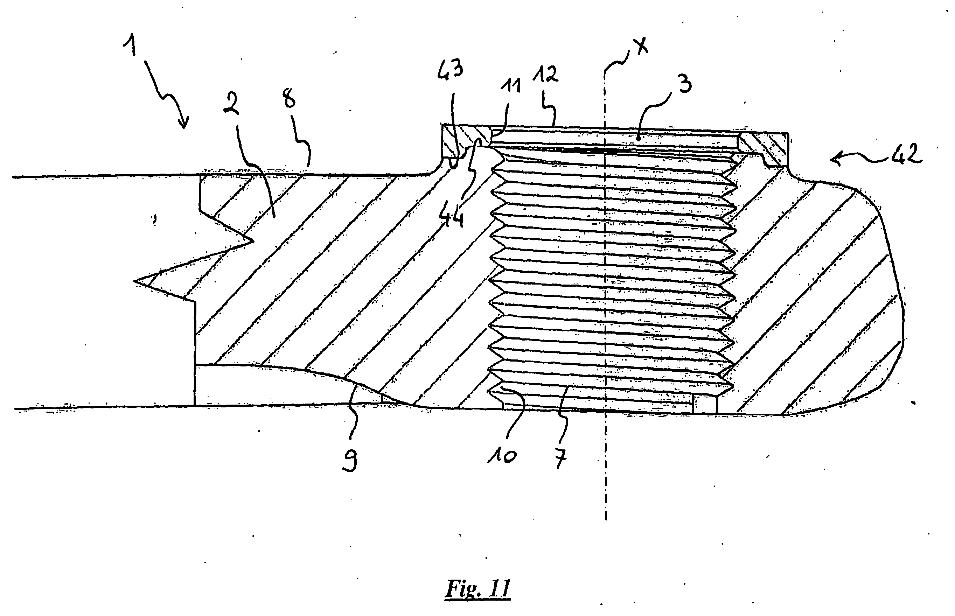

Just as a further example of the above, figure 11 shows a pedal crank assembly 1 wherein the mutual contact surfaces 43, 44 of the washer 3 and of the pedal crank 2, respectively, are stepped, with an overall sloping progression with respect to the axis X of the hole 7, with the contact surface 43 of the washer 3 overall diverging towards the pedal crank 2, and the contact surface 44 of the pedal crank 2 overall converging towards the washer 3.

Additionally to the effect of friction on the washer 3, it is possible to make the washer 3 strain even more as a single piece with the pedal crank 2, and thus protect more the pedal crank 2 against arising of cracks at the hole 7 in the proximity of the distal side 8, through a mechanical constraint between the pedal crank 2 and the washer 3.

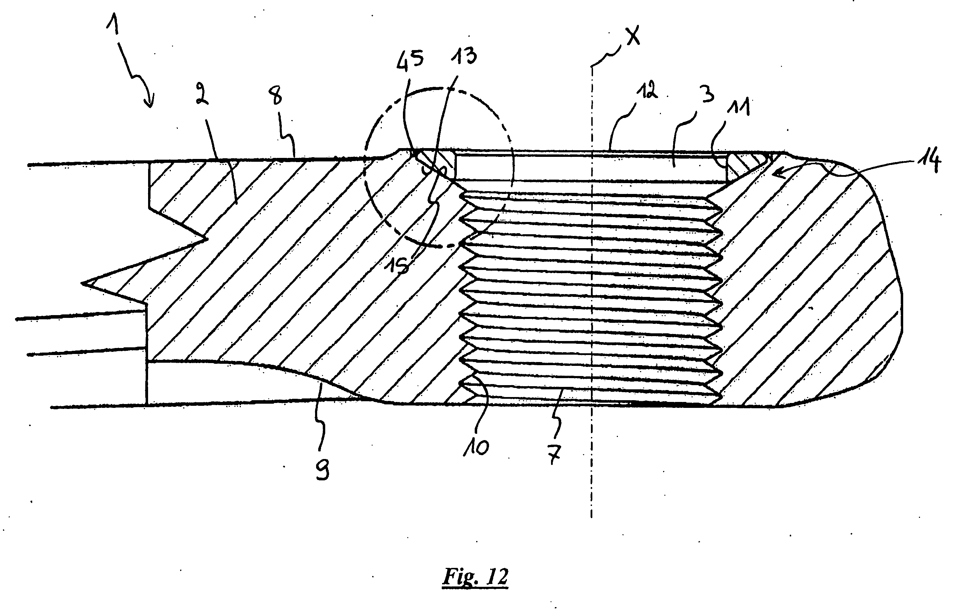

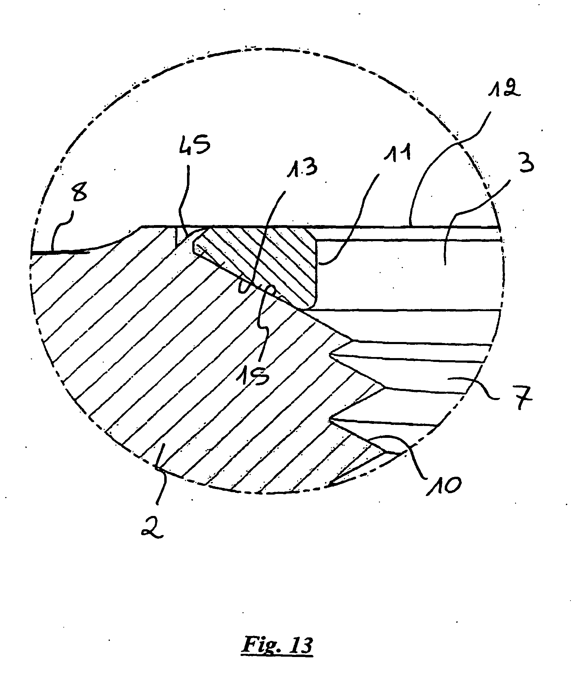

Such a mechanical constraint can be accomplished by caulking the pedal crank 2 and/or the washer 3 around the seat 14 or 42 for the washer 3, so that a part of the material of the pedal crank 2 partially covers the washer 3 or vice-versa. This is shown by way of an example only in the embodiment of the pedal crank assembly 1 shown in figure 12 and in the enlarged view of figure 13, wherein a part 45 of the material of the pedal crank 2 partially covers the washer 3. The embodiment shown in figures 12 and 13 corresponds as for the rest with the embodiment of figures 1 and 4, but it should be understood that the mutual contact surfaces of the pedal crank 2 and the washer 3 could be made according to the other above described embodiments.

In case the pedal crank is made from composite material it is particularly simple to constrain the washer 3 to the pedal crank 2 through co-moulding. When the composite material of the pedal crank 2 is cured it adheres to the washer 3 and prevents any relative mutual movement.

In this case the washer 3 can be held by means of the material of the pedal crank 2 that partially covers the washer 3, similarly to the caulking material 45, or else through other projections or protrusions made in the side wall of the washer 3.

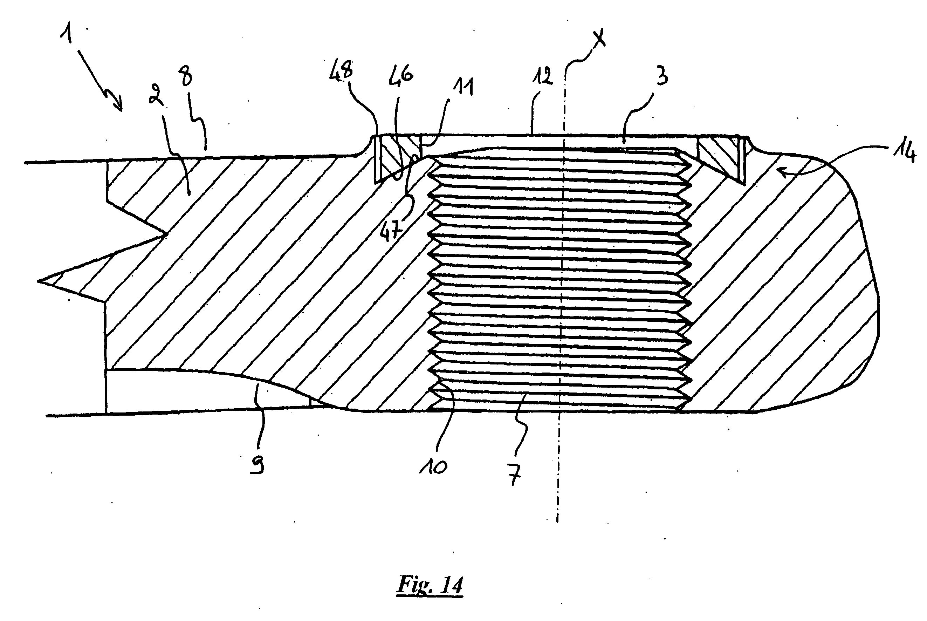

As a further alternative, in the embodiment of figure 14 the contact surface 46 of the washer 3 is conical diverging towards the pedal crank 2, and the contact surface 47 of the pedal crank 2 is conical converging towards the washer 3, analogously to the embodiment of figure 10, but the seat for receiving the washer 3 is a recessed seat 14 in the pedal crank 2.

In that case, the conical contact surface 47 of the pedal crank 2 protrudes within the seat 14 and wedges into the flaring of the contact surface 46 of the washer 3. When the protrusion of the pedal crank 2 expands because of the tensile stress of the axle 100 inserted in the hole 7, it places the washer 3 under tensile stress adding in this case also a mechanical effect to the effect of friction.

It should be noted that between the seat 14 of the pedal crank 2 and the washer 3 there is an annular clearance 48, which could nevertheless be missing.

In view of the fact that the force that the cyclist exerts on the pedal changes in strength during the pedalling cycle as a function of the angular position of the pedal crank assembly 1, alternatively or additionally to providing a mechanical constraint, it is possible to modify the mutual contact surfaces of the pedal crank 2 and the washer 3 so as to increase the friction A during the portion of the pedalling cycle when the greater force is exerted with respect to the portion of the pedalling cycle when the smallest force is exerted.

This can be obtained by providing for the extent of the mutual contact surfaces of the pedal crank and the washer at different angular positions around the axis X to be different.

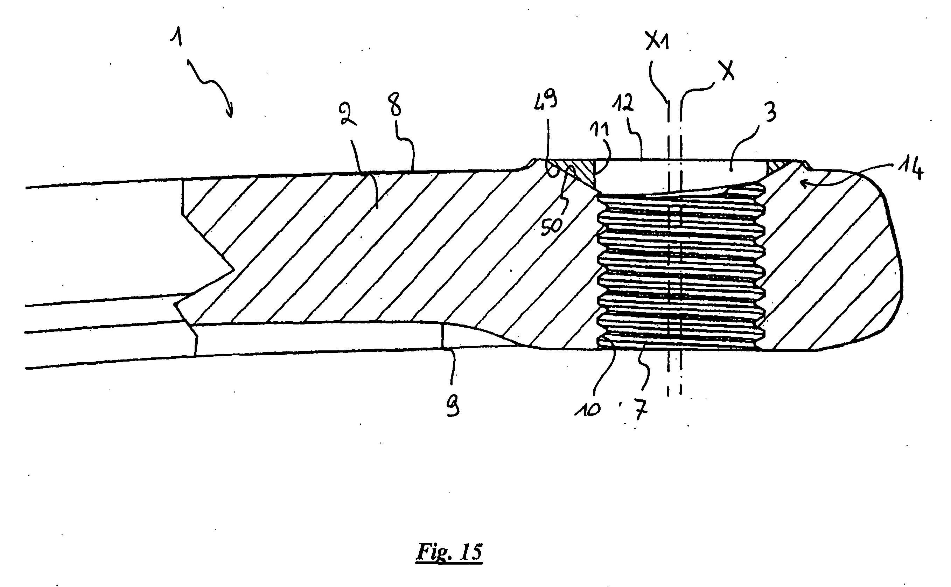

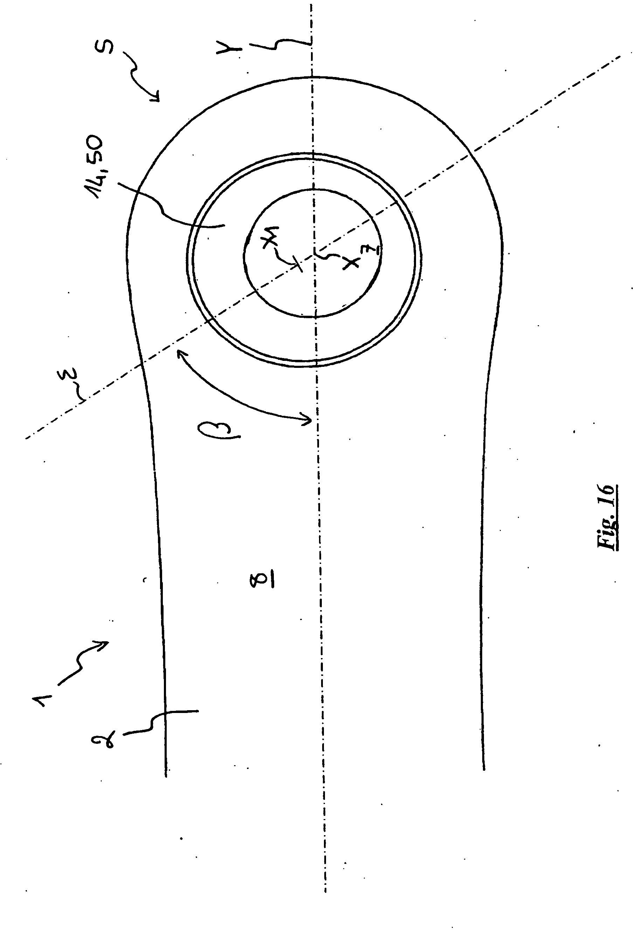

Thus, in the embodiment shown in figures 15 and 16, the contact surface 49 of the washer 3 and the contact surface 50 of the pedal crank 2 are conical, but eccentric with respect to the hole 7 of the pedal crank 2 and to the central hole 11 of the washer 2. The axis X1 of the cone that defines the mutual contact surfaces 49, 50 is preferably parallel to the axis X, and preferably defines, with the axis X, a plane ε sloping with respect to the longitudinal centre line Y of the pedal crank 2 by an angle β comprised between 30° and 70°.

Of course, the other mutual contact surfaces described above could also be made eccentric.

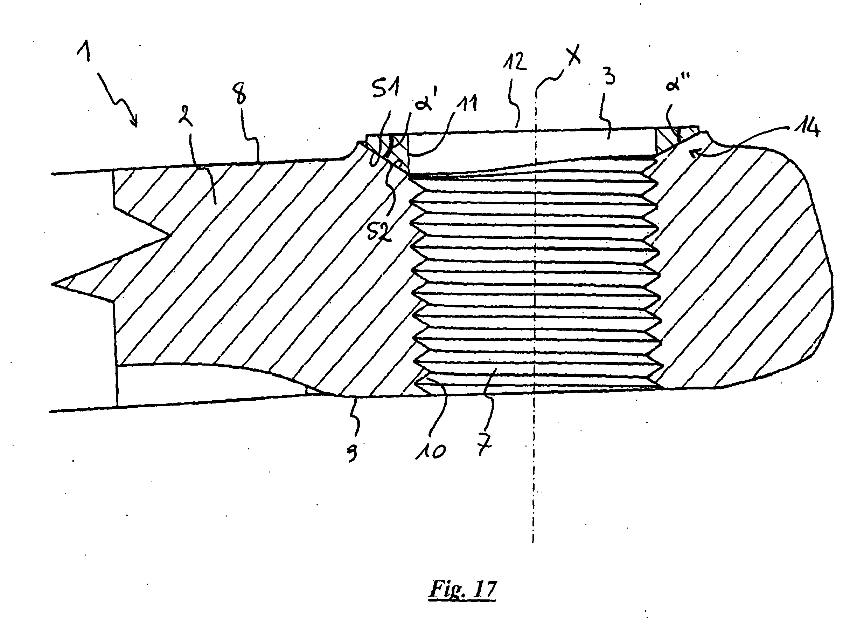

As a further example, in the embodiment shown in figure 17, the contact surface 51 of the washer 3 and the contact surface 52 of the pedal crank 2 have variable slopes as a function of the angular position around the axis X. In figure 17 the two slopes α' and α" are identified at the two angular positions defined by the longitudinal axis Y of the pedal crank 2.

The slope can vary for example between 5° and 45°, in a gradual manner all around the axis X. In an embodiment that is particularly simple to carry out, the contact surfaces 51, 52 with gradually variable slope are conical surfaces with sloping axis with respect to the axis X of the hole 7.

The slope of the surfaces 51, 52 can however vary also in sectors, or also there can be a first sector that extends for a first predetermined arc of circumference with a minimum slope, a second sector that extends for a second predetermined arc of circumference with a maximum slope, and two join sectors where the slope varies gradually, preferably linearly, between the minimum slope and the maximum slope.

Mutual contact surfaces of the pedal crank 2 and the washer 3 that are not rotational surfaces, i.e. that do not have circular symmetry, like for example frustum of pyramid-shaped surfaces or more generally faceted surfaces, can be used. In this case, similarly to the case of the embodiment of figures 15 to 16 and of figure 17, the mutual rotation between the pedal crank 2 and the washer 3 about the axis X is also prevented.

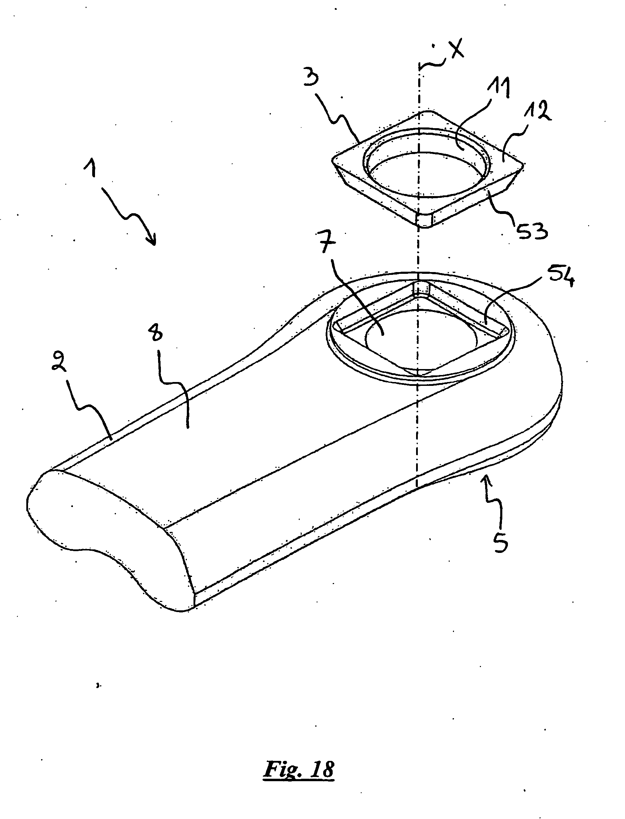

Only as an example figure 18 shows a pedal crank assembly 1 wherein the mutual contact surfaces 53, 54 of the washer 3 and of the pedal crank 2, respectively, are frustum of square pyramid-shaped surfaces, with smoothed edges.

The base of the pyramid can have any number of sides; moreover, also in the case of multi-facetted or pyramid-shaped mutual contact surfaces, the axis can be sloping and/or eccentric with respect to the axis X.

Moreover, in the various embodiments described above, the substantially flat surface 12 of the washer 3 and/or the abutment surface 103 of the axle 100 could be replaced by a knurled, grooved or otherwise textured surface. Moreover, the hole 11 of the washer 3 could be conical or more generally could have a divergent or convergent progression corresponding to the overall progression of its surface for contacting with the pedal crank 2, so as to obtain a thinner washer 3, of advantageously less weight.

Those skilled in the art will also understand that what has been described and illustrated applies to the hole 6 for coupling with the axle of the bottom bracket, as an alternative or in addition to the hole 7 for coupling with the pedal.

One or other of the hole 6 for coupling with the bottom bracket axle and the hole 7 for coupling with the pedal can also be replaced by an axle made integrally with the pedal crank, a hole being instead provided in the pedal or in the bottom bracket, respectively.

## Claims

1. Bicycle pedal crank assembly (1) comprising a pedal crank (2) having a first end (4) for coupling with a bottom bracket and a second end (5) for coupling with a pedal, at least one of said first end (4) and said second end (5) comprising a hole (7) extending from a side (8) of the pedal crank (2) for coupling with an axle (100) of the pedal or of the bottom bracket, respectively, comprising a reinforcing element (3) extending around the hole (7) in the proximity of said side (8) of the pedal crank (2), having a portion (12) configured for receiving on abutment portion (103) of said axle (100) resting upon it, the pedal crank (2) and the reinforcing element (3) contacting along a respective surface (13, 15; 20, 21; 28, 29; 34, 35; 36, 37; 38, 39; 40, 41; 43, 44; 46, 47; 49, 50; 51, 52; 53, 54) not entirely contained within a plane perpendicular to an axis (X) of the hole (7), and **characterized in that** in the direction of the axis (X), the extent (H1, H2) of said mutual contact surfaces (13, 15; 20, 21; 28, 29; 34, 35; 36, 37; 38, 39; 40, 41; 43, 44; 46, 47; 49, 50; 51, 52; 53, 54) being shorter than half the extent (H4) of the hole (7).

2. Pedal crank assembly (1) according to claim 1, **characterised in that** the mutual contact surfaces (13, 15; 20, 21; 28, 29; 34, 35; 36, 37; 38, 39; 40, 41; 43, 44; 46, 47; 49, 50; 51, 52; 53, 54) have an overall sloping progression with respect to the axis (X).

3. Pedal crank assembly (1) according to claim 1 or 2, **characterised in that** in the direction of the axis (X), the extent (H1 H2) of said mutual contact surfaces (13, 15; 20, 21; 28, 29; 34, 35; 36, 37; 38, 39; 40, 41; 43, 44; 46, 47; 49, 50; 51, 52; 53, 54) is shorter than one fifth of the extent (H4) of the hole (7).

4. Pedal crank assembly (1) according to one of the previous claims, **characterised in that** in the direction of the axis (X), the extent (H1 H2) of said mutual contact surfaces (13, 15; 20, 21; 28, 29; 34, 35; 36, 37; 38, 39; 40, 41; 43, 44; 46, 47; 49, 50; 51, 52; 53, 54) is comprised between one pitch (P) of an internal threading (10) of the hole (7) and twice the pitch (P).

5. Pedal crank assembly (1) according to any one of the previous claims, **characterised in that** the reinforcing element (3) has a greater modulus of elasticity than that of the pedal crank (2).

6. Pedal crank assembly (1) according to any one of the previous claims, **characterised in that** the reinforcing element (3) is made from a material selected from the group comprised of steel, titanium alloy and aluminium alloy.

7. Pedal crank assembly (1) according to any one of the previous claims, **characterised in that** the mutual contact surfaces (13, 15; 40, 41; 46, 47; 49, 50) are conical surfaces.

8. Pedal crank assembly (1) according to claim 7, **characterised in that** the generating line of the conical mutual contact surfaces (13, 15; 40, 41; 46, 47; 49, 50) is sloping with respect to a plane perpendicular to the axis (X) by an angle (α) comprised between 5° and 45°.

9. Pedal crank assembly (1) according to any one of claims 1 to 6, **characterised in that** the mutual contact surfaces (20, 21; 28, 29) are rotational surfaces having a curvilinear generating line with at least one inflexion point.

10. Pedal crank assembly (1) according to claim 9, **characterised in that** the curvilinear generating line (20, 21) has at least two inflexion points.

11. Pedal crank assembly (1) according to any one of claims 1 to 6, **characterised in that** the mutual contact surfaces (38, 39; 43, 44) are rotational surfaces having a stepped generating line.

12. Pedal crank assembly (1) according to any one of claims 1 to 6, **characterised in that** the mutual contact surfaces (34, 35; 36, 37) are rotational surfaces having an arc of circumference-shaped generating line.

13. Pedal crank assembly (1) according to any one of claims 1 to 6, **characterised in that** the mutual contact surfaces (53, 54) are multi-faceted surfaces.

14. Pedal crank assembly (1) according to claim 13, **characterised in that** the mutual contact surfaces (53, 54) are frustum of pyramid-shaped surfaces.

15. Pedal crank assembly (1) according to any one of the previous claims, **characterised in that** the contact surface (13; 20; 28; 34; 36; 38; 49; 51; 53) of the reinforcing element (3) overall converges towards the pedal crank (2), and the contact surface (15; 21; 29; 35; 37; 39; 50; 52; 54) of the pedal crank (2) overall diverges towards the reinforcing element (3).

16. Pedal crank assembly (1) according to any one of claims 1 to 14, **characterised in that** the contact surface (40; 43; 46) of the reinforcing element (3) overall diverges towards the pedal crank (2), and the contact surface (41; 44; 47;) of the pedal crank (2) overall converges towards the reinforcing element (3).

17. Pedal crank assembly (1) according to any one of the previous claims, **characterised in that** the pedal crank (2) comprises a recessed seat (14) for housing the reinforcing element (3).

18. Pedal crank assembly (1) according to any one of claims 1 to 16, **characterised in that** the pedal crank (2) comprises a protruding seat (42) for housing the reinforcing element (3).

19. Pedal crank assembly (1) according to any one of the previous claims, **characterised by** a mechanical constraint between the pedal crank (2) and the reinforcing element (3).

20. Pedal crank assembly (1) according claim 19, **characterised in that** said mechanical constraint comprises a caulking (45).

21. Pedal crank assembly (1) according to claim 20, **characterised in that** the pedal crank (2) comprises a recessed seat (14) for housing the reinforcing element (3), and said mechanical constraint comprises a caulking (45) of the pedal crank (2) or of the reinforcing element (3) around the seat (14) for the reinforcing element (33).

22. Pedal crank assembly (1) according to claim 20, **characterised in that** the pedal crank (2) comprises a protruding seat (42) for housing the reinforcing element (3), and said mechanical constraint comprises a caulking (45) of the pedal crank (2) or of the reinforcing element (3) around said seat (42).

23. Pedal crank assembly (1) according to claim 19, **characterised in that** the pedal crank (2) is made from a composite material and said mechanical constraint is accomplished by co-moulding of the reinforcing element (3) in said pedal crank (2).

24. Pedal crank assembly (1) according to any one of the previous claims, **characterised in that** the mutual contact surfaces (49, 50; 51, 52) between the pedal crank (2) and the reinforcing element (3) have a different extent at different angular positions about the axis (X).

25. Pedal crank assembly (1) according to claim 24, **characterised in that** the mutual contact surfaces (49, 50) between the pedal crank (2) and the reinforcing element (3) are eccentric surfaces with respect to the hole (7).

26. Pedal crank assembly (1) according to claim 25, **characterised in that** the axis (X1) of the mutual contact surfaces (49, 50) is parallel to the axis (X), and defines, with the axis (X), a plane (ε) sloping with respect to a longitudinal centre line (Y) of the pedal crank (2) by an angle (β) comprised between 30° and 70°.

27. Pedal crank assembly (1) according to claim 24, **characterised in that** the mutual contact surfaces (51, 52) of the pedal crank (2) and the reinforcing element (3) have a different slope (α', α") at different angular positions about the axis (X).

28. Bicycle pedal crank (2) having a first end (4) for coupling with an axle of the bottom bracket and a second end (5) for coupling with a pedal, at least one of said first end (4) and said second end (5) comprising a hole (7) extending from a side (8) of the pedal crank (2) for coupling with an axle (100) of the pedal or respectively of the bottom bracket, comprising, in the proximity of said side (8), a surface (15; 21; 29; 35; 37; 39; 41; 44; 47; 50; 52; 54) configured for contacting a reinforcing element, said contact surface being not entirely contained within a plane perpendicular to an axis (X) of the hole (7) and having an extent (H1), in the direction of the axis (X), shorter than half the extent (H4) of the hole (7).

29. Pedal crank (2) according to claim 28, **characterised in that** the contact surface (15; 21; 29; 35; 37; 39; 47; 50; 52; 54) defines a recessed seat (14) in the pedal crank (2).

30. Pedal crank according to claim 28, **characterised in that** the contact surface (41; 44) defines a protrusion (42) in the pedal crank (2).

31. Pedal crank (2) according to any one of claims 28 to 30, **characterised in that** the contact surface (15; 21; 29; 35; 37: 39; 41; 44; 47; 50) is a rotational surface.

32. Pedal crank (2) according to claim 31, **characterised in that** the rotational surface is a conical surface (15; 41; 47; 50).

33. Pedal crank (2) according to claim 31, **characterised in that** the rotational surface (21, 29) has a curvilinear generating line with at least one inflexion point.

34. Pedal crank (2) according to claim 31, **characterised in that** the rotational surface (39, 44) has a stepped generating line.

35. Pedal crank (2) according to claim 31, **characterised in that** the rotational surface (35, 37) has an arc of circumference-shaped generating line.

36. Pedal crank (2) according to one of claims 28 to 30, **characterised in that** the contact surface (54) is multi-faceted.

37. Pedal crank (2) according to claim 36, **characterised in that** the contact surface (54) is frustum of pyramid-shaped.

38. Pedal crank (2) according to any one of claims 28 to 37, **characterised in that** the contact surface (50; 52) has a different extent at different angular positions about the axis (X).

39. Pedal crank (2) according to claim 38, **characterised in that** the contact surface (50) is an eccentric surface with respect to the hole (7).

40. Pedal crank (2) according to claim 38, **characterised in that** the contact surface (52) has a different slope (α', α" ) at different angular positions about the axis (X).

41. Reinforcing element for a bicycle pedal crank, comprising a hole configured for allowing passage of an axle (100) of the pedal or of the bottom bracket, respectively, a portion (12) configured for receiving an abutment portion (103) of said axle (100) resting upon it, and a contact surface (13; 20; 28; 34; 36; 38; 40; 43; 46; 49; 51; 53) not entirely contained within a plane perpendicular to an axis (X) of the hole (11), said surface configured for contacting the pedal crank or bottom bracket respectively, **characterised by** the extent (H1, H2) of said contact surface being shorter than half the extent (H4) of the hole (7) of the pedal crank when available.

42. Reinforcing element according to claim 41, **characterised in that** the abutment portion (12) comprises an abutment surface (12) essentially opposed the contact surface (13; 20; 28; 34; 36; 38; 40; 43; 46; 49; 51; 53).

43. Reinforcing element according to claim 41 or 42, **characterised in that** the contact surface (13; 40; 46; 49) is conical.

44. Reinforcing element according to claim 41 or 42, **characterised in that** the contact surface is a rotational surface (20; 28) having a curvilinear generating line with at least one inflexion point.

45. Reinforcing element according to claim 41 or 42, **characterised in that** the contact surface is a rotational surface (34; 36) having an arc of circumference-shaped generating line.

46. Reinforcing element according to claim 41 or 42, **characterised in that** the contact surface is a rotational surface having a stepped generating line (39; 43).

47. Reinforcing element according to claim 41 or 42, **characterised in that** the contact surface (53) is multi-faceted.

48. Reinforcing element according to claim 47, **characterised in that** the contact surface is a frustum of pyramid-shaped surface (53).

49. Reinforcing element according to one of claims 41 to 48, **characterised in that** the contact surface (49) is eccentric with respect to the hole (7).

## Patentansprüche

1. Fahrrad-Tretkurbelanordnung (1), die eine Tretkurbel (2) mit einem ersten Ende (1) zum Koppeln mit einem Tretlager und ein zweites Ende (5) zum Koppeln mit einem Pedal umfasst, wobei wenigstens das erste Ende (4) oder das zweite Ende (5) ein Loch (7) umfasst, das sich von einer Seite (8) der Tretkurbel (2) zum Koppeln mit einer Achse (100) des Pedals bzw. des Tretlagers erstreckt, die ein Verstärkungselement (3) umfasst, das sich in der Nähe der Seite (8) der Tretkurbel (2) um das Loch (7) herum erstreckt und einen Abschnitt (12) hat, der zum Aufnehmen eines Anschlagabschnitts (103) der Achse (100) eingerichtet ist, der darauf aufliegt, wobei die Tretkurbel (2) und das Verstärkungselement (3) an einer jeweiligen Fläche 13, 15; 20, 21; 28, 29; 34, 35; 36, 37; 38, 39; 40, 41; 43, 44; 46, 47; 49, 50; 51, 52; 53, 54) in Kontakt kommen, die nicht vollständig in einer Ebene senkrecht zu einer Achse (X) des Lochs (7) eingeschlossen ist, und **dadurch gekennzeichnet, dass** in der Richtung der Achse (X) die Ausdehnung (H1, H2) der Flächen von gegenseitigem Kontakt (13, 15; 20, 21; 28, 29; 34, 35; 36, 37; 38, 39; 40, 41; 43, 44; 46, 47; 49, 50; 51, 52; 53, 54) kürzer ist als die Hälfte der Ausdehnung (H4) des Lochs (7).

2. Tretkurbelanordnung (1) nach Anspruch 1, **dadurch gekennzeichnet, dass** die Flächen gegenseitigen Kontakts (13, 15; 20, 21; 28, 29; 34, 35; 36, 37; 38, 39; 40, 41; 43, 44; 46, 47; 49, 50; 51, 52; 53, 54) in Bezug auf die Achse (X) einen insgesamt geneigten Verlauf haben.

3. Tretkurbelanordnung (1) nach Anspruch 1 oder 2, **dadurch gekennzeichnet, dass** in der Richtung der Achse (X) die Ausdehnung (H1 H2) der Flächen gegenseitigen Kontakts (13, 15; 20, 21; 28, 29; 34, 35; 36, 37; 38, 39; 40, 41; 43, 44; 46, 47; 49, 50; 51, 52; 53, 54) kürzer ist als ein Fünftel der Ausdehnung (H4) des Lochs (7).

4. Tretkurbelanordnung (1) nach einem der vorangehenden Ansprüche, **dadurch gekennzeichnet, dass** in der Richtung der Achse (X) die Ausdehnung (H1 H2) der Flächen gegenseitigen Kontakts (13, 15; 20, 21; 28, 29; 34, 35; 36, 37; 38, 39; 40, 41; 43, 44; 46, 47; 49, 50; 51, 52; 53, 54) zwischen einer Teilung (P) eines Innengewindes (10) des Lochs (7) und dem Doppelte der Teilung (P) liegt.

5. Tretkurbelanordnung (1) nach einem der vorangehenden Ansprüche, **dadurch gekennzeichnet, dass** das Verstärkungselement (3) einen größeren Elektrizitätsmodul hat als die Tretkurbel (2).

6. Tretkurbelanordnung (1) nach einem der vorangehenden Ansprüche, **dadurch gekennzeichnet, dass** das Verstärkungselement (3) aus einem Material besteht, das aus der Gruppe ausgewählt wird, die aus Stahl, Titanlegierung und Aluminiumlegierung besteht.

7. Tretkurbelanordnung (1) nach einem der vorangehenden Ansprüche, **dadurch gekennzeichnet, dass** die Flächen gegenseitigen Kontakts (13, 15; 40, 41; 46, 47; 49, 50) konische Flächen sind.

8. Tretkurbelanordnung (1) nach Anspruch 7, **dadurch gekennzeichnet, dass** die erzeugende Linie der konischen Flächen gegenseitigen Kontakts (13, 15; 40, 41; 46, 47; 49, 50) in Bezug auf eine Ebene senkrecht zu der Achse (X) um einen Winkel (α) geneigt ist, der zwischen 5° und 435° liegt.

9. Tretkurbelanordnung (1) nach einem der Ansprüche 1 bis 6, **dadurch gekennzeichnet, dass** die Flächen gegenseitigen Kontakts (20, 21; 28, 29) Rotationsflächen sind, die eine gekrümmte erzeugende Linie mit wenigstens einem Wendepunkt haben.

10. Tretkurbelanordnung (1) nach Anspruch 9, **dadurch gekennzeichnet, dass** die gekrümmte erzeugende Linie (20, 21) wenigstens zwei Wendepunkte hat.

11. Tretkurbelanordnung (1) nach einem der Ansprüche 1 bis 6, **dadurch gekennzeichnet, dass** die Flächen gegenseitigen Kontakts (38, 39; 43, 44) Rotationsflächen sind, die eine abgestufte erzeugende Linie haben.

12. Tretkurbelanordnung (1) nach einem der Ansprüche 1 bis 6, **dadurch gekennzeichnet, dass** die Flächen gegenseitigen Kontakts (34, 35; 36, 37) Rotationsflächen sind, die eine kreisbogenförmige erzeugende Linie haben.

13. Tretkurbelanordnung (1) nach einem der Ansprüche 1 bis 6, **dadurch gekennzeichnet, dass** die Flächen gegenseitigen Kontakts (53, 54) Flächen mit mehreren Facetten sind.

14. Tretkurbelanordnung (1) nach Anspruch 13, **dadurch gekennzeichnet, dass** die Flächen gegenseitigen Kontakts (53, 54) pyramidenstumpfförmige Flächen sind.

15. Tretkurbelanordnung (1) nach einem der vorangehenden Ansprüche, **dadurch gekennzeichnet, dass** die Kontaktfläche (13; 20; 28; 34; 36; 38; 49; 51; 53) des Verstärkungselementes (3) insgesamt auf die Tretkurbel (2) zu konvergiert und die Kontaktfläche (15; 21; 29; 35; 37; 39; 50; 52; 54) der Tretkurbel (2) insgesamt auf das Verstärkungselement (3) zu divergiert.

16. Tretkurbelanordnung (1) nach einem der Ansprüche 1 bis 14, **dadurch gekennzeichnet, dass** die Kontaktfläche (40; 43; 46) des Verstärkungselementes (3) insgesamt auf die Tretkurbel (2) zu divergiert und die Kontaktfläche (41; 44; 47) der Tretkurbel (2) insgesamt auf das Verstärkungselement (3) zu konvergiert.

17. Tretkurbelanordnung (1) nach einem der vorangehenden Ansprüche, **dadurch gekennzeichnet, dass** die Tretkurbel (2) eine vertiefte Aufnahme (14) zum Aufnehmen des Verstärkungselementes (3) umfasst.

18. Tretkurbelanordnung (1) nach einem der Ansprüche 1 bis 16, **dadurch gekennzeichnet, dass** die Tretkurbel (2) eine vorstehende Aufnahme (42) zum Aufnehmen des Verstärkungselementes (3) umfasst.

19. Tretkurbelanordnung (1) nach einem der vorangehenden Ansprüche, **gekennzeichnet durch** eine mechanische Begrenzung zwischen der Tretkurbel (2) und dem Verstärkungselement (3).

20. Tretkurbelanordnung (1) nach Anspruch 19, **dadurch gekennzeichnet, dass** die mechanische Begrenzung eine Verstemmung (45) umfasst.

21. Tretkurbelanordnung (1) nach Anspruch 20, **dadurch gekennzeichnet, dass** die Tretkurbel (2) eine vertiefte Aufnahme (14) zum Aufnehmen des Verstärkungselementes (3) umfasst und die mechanische Begrenzung eine Verstemmung (45) der Tretkurbel (2) oder des Verstärkungselementes (3) um die Aufnahme (14) für das Verstärkungselement (3) herum umfasst.

22. Tretkurbelanordnung (1) nach Anspruch 20, **dadurch gekennzeichnet, dass** die Tretkurbel (2) eine vorstehende Aufnahme (42) zum Aufnehmen des Verstärkungselementes (3) umfasst und die mechanische Begrenzung eine Verstemmung (45) der Tretkurbel (2) oder des Verstärkungselementes (3) um die Aufnahme (42) herum umfasst.

23. Tretkurbelanordnung (1) nach Anspruch 19, **dadurch gekennzeichnet, dass** die Tretkurbel (2) aus einem Verbundmaterial besteht und die mechanische Begrenzung durch Einformen des Verstärkungselementes (3) In die Tretkurbel (2) hergestellt wird.

24. Tretkurbelanordnung (1) nach einem der vorangehenden Ansprüche, **dadurch gekennzeichnet, dass** die Flächen gegenseitigen Kontakts (49, 50; 51, 52) zwischen der Tretkurbel (2) und dem Verstärkungselement (3) eine unterschiedliche Ausdehnung an verschiedenen Winkelpositionen um die Achse (X) herum haben.

25. Tretkurbelanordnung (1) nach Anspruch 24, **dadurch gekennzeichnet, dass** die Flächen gegenseitigen Kontakts (49, 50) zwischen der Tretkurbel (2) und dem Verstärkungselement (3) in Bezug auf das Loch (7) exzentrische Flächen sind.

26. Tretkurbelanordnung (1) nach Anspruch 25, **dadurch gekennzeichnet, dass** die Achse (X1) der Flächen (49, 50) gegenseitigen Kontakts parallel zu der Achse (X) ist und mit der Achse (X) eine Ebene (ε) bildet, die In Bezug auf eine Längsmittellinie (Y) der Tretkurbel (2) um einen Winkel (β) geneigt ist, der zwischen 30° und 70° liegt.

27. Tretkurbelanordnung (1) nach Anspruch 24, **dadurch gekennzeichnet, dass** die Flächen gegenseitigen Kontakts (51, 52) der Tretkurbel (2) und des Verstärkungselementes (3) eine unterschiedliche Neigung (α',α") an verschiedenen Winkelpositionen um die Achse (X) herum haben.

28. Fahrrad-Tretkurbel (2), die ein erstes Ende (4) zum Koppeln mit einer Achse des Tretlagers und ein zweites Ende (5) zum Koppeln mit einem Pedal hat, wobei wenigstens das erste Ende (4) oder das zweite Ende (5) ein Loch (7) umfasst, das sich von einer Seite (8) der Tretkurbel (2) zum Koppeln mit einer Achse (100) des Pedals bzw. des Tretlagers erstreckt, und die in der Nähe der Seite (8) eine Fläche (15; 21; 29; 35; 37; 39; 41; 44; 47; 50; 52; 54) umfasst, die zum Kontakt mit einem Verstärkungselement eingerichtet ist, wobei die Kontaktfläche nicht vollständig in einer Ebene senkrecht zu einer Achse (X) des Lochs (7) eingeschlossen ist und eine Ausdehnung (H1) in der Richtung der Achse (X) hat, die kürzer ist als die Hälfte der Ausdehnung (H4) des Lochs (7).

29. Tretkurbel (2) nach Anspruch 28, **dadurch gekennzeichnet, dass** die Kontaktfläche (17) eine vertiefte Aufnahme (14) in der Tretkurbel (2) aufweist.

30. Tretkurbel nach Anspruch 28, **dadurch gekennzeichnet, dass** die Kontaktfläche (41; 44) einen Vorsprung In der Tretkurbel (2) aufweist.

31. Tretkurbel (2) nach einem der Ansprüche 28 bis 30, **dadurch gekennzeichnet, dass** die Kontaktfläche (15; 21; 29; 35; 37; 39; 41; 44; 47; 50) eine Rotationsfläche ist.

32. Tretkurbel (2) nach Anspruch 31, **dadurch gekennzeichnet, dass** die Rotationsfläche eine konische Fläche (15; 41; 47; 50) ist.

33. Tretkurbel (2) nach Anspruch 31, **dadurch gekennzeichnet, dass** die Rotationsfläche (21, 29) eine gekrümmte erzeugende Linie mit wenigstens einem Wendepunkt hat.

34. Tretkurbel (2) nach Anspruch 31, **dadurch gekennzeichnet, dass** die Rotationsfläche (39, 44) eine abgestufte erzeugende Linie hat.

35. Tretkurbel (2) nach Anspruch 31, **dadurch gekennzeichnet, dass** die Rotationsfläche (35, 37) eine kreisbogenförmige erzeugende Linie hat.

36. Tretkurbel (2) nach einem der Ansprüche 28 bis 30, **dadurch gekennzeichnet, dass** die Kontaktfläche (54) mehrere Facetten hat.

37. Tretkurbel (2) nach Anspruch 36, **dadurch gekennzeichnet, dass** die Kontaktfläche (54) pyramidenstumpfförmig ist.

38. Tretkurbel (2) nach einem der Ansprüche 28 bis 37, **dadurch gekennzeichnet, dass** die Kontaktfläche (50; 52) eine unterschiedliche Ausdehnung an verschiedenen Winkelpositionen um die Achse (X) herum hat.

39. Tretkurbel (2) nach Anspruch 38, **dadurch gekennzeichnet, dass** die Kontaktfläche (50) eine in Bezug auf das Loch (7) exzentrische Fläche ist.

40. Tretkurbel (2) nach Anspruch 38, **dadurch gekennzeichnet, dass** die Kontaktfläche (52) eine unterschiedliche Neigung (α', α") an verschiedenen Winkelpositionen um die Achse (X) herum hat.

41. Verstärkungselement für eine Fahrzeug-Tretkurbel, das ein Loch, das so eingerichtet ist, dass es Hindurchtreten einer Achse (100) des Pedals bzw. des Tretlagers zulässt, einen Abschnitt (12), der so eingerichtet ist, dass er einen Anschlagabschnitt (103) der Achse (100) aufnimmt, die darauf aufliegt, und eine Kontaktfläche (13; 20; 28; 34; 36; 36; 40; 43; 46; 49; 51; 53) umfasst, die nicht vollständig in einer Ebene senkrecht zu einer Achse (X) des Lochs (11) eingeschlossen ist, wobei die Fläche so eingerichtet ist, dass sie mit der Tretkurbel bzw. dem Tretlager in Kontakt kommt, **dadurch gekennzeichnet ist, dass** die Ausdehnung (H1, H2) der konkaven Fläche kürzer Ist als die Hälfte der Ausdehnung (H4) der Gesamtheit (7) der Tretkurbel, wenn sie verfügbar ist.

42. Verstärkungselement nach Anspruch 41, **dadurch gekennzeichnet, dass** der Anschlagabschnitt (12) eine Anschlagfläche (12) umfasst, die im Wesentlichen der Kontaktfläche (13; 20; 28; 34; 36; 38; 40; 43; 46; 49; 51; 53) gegenüberliegt.

43. Verstärkungselement nach Anspruch 41 oder 42, **dadurch gekennzeichnet, dass** die Kontaktfläche (13; 40; 46; 49) konisch ist.

44. Verstärkungselement nach Anspruch 41 oder 42, **dadurch gekennzeichnet, dass** die Kontaktfläche eine Rotationsfläche (20; 28) ist, die eine gekrümmte erzeugende Linie mit wenigstens einem Wendepunkt hat.

45. Verstärkungselement nach Anspruch 41 oder 42, **dadurch gekennzeichnet, dass** die Kontaktfläche eine Rotationsfläche (34; 36) ist, die eine kreisbogenförmige erzeugende Linie hat.

46. Verstärkungselement nach Anspruch 41 oder 42, **dadurch gekennzeichnet, dass** die Kontaktfläche eine Rotationsfläche ist, die eine abgestufte erzeugende Linie (39; 43) hat.

47. Verstärkungselement nach Anspruch 41 oder 42, **dadurch gekennzeichnet, dass** die Kontaktfläche (53) mehrere Facetten hat.

48. Verstärkungselement nach Anspruch 47, **dadurch gekennzeichnet, dass** die Kontaktfläche eine pyramidenstumpfförmige Fläche (53) ist.

49. Verstärkungselement nach einem der Ansprüche 41 bis 48, **dadurch gekennzeichnet, dass** die Kontaktfläche (49) in Bezug auf das Loch (7) exzentrisch ist.

## Revendications

1. Ensemble (1) de manivelle de bicyclette, comprenant une manivelle (2) ayant une première extrémité (4) pour l'accouplement à un jeu de pédalier et une seconde extrémité (5) pour l'accouplement à une pédale, au moins l'une de ladite première extrémité (4) et de ladite seconde extrémité (5) comportant un orifice (7) s'étendant depuis un côté (8) de la manivelle (2) pour l'accouplement à un axe (100), respectivement de la pédale ou du jeu de pédalier, et comprenant un élément de renforcement (3) s'étendant autour de l'orifice (7) à proximité dudit côté (8) de la manivelle (2) et comportant une partie (12) conçue pour recevoir une partie de butée (103) dudit axe (100) reposant sur elle, la manivelle (2) et l'élément de renforcement (3) entrant en contact le long d'une surface respective (13, 15 ; 20, 21 ; 28, 29 ; 34, 35 ; 36, 37 ; 38, 39 ; 40, 41 ; 43, 44 ; 46, 47 ; 49, 50 ; 51, 52 ; 53, 54) non totalement contenue dans un plan perpendiculaire à un axe (X) de l'orifice (7), **caractérisé en ce que**, dans la direction de l'axe (X), l'étendue (H1, H2) desdites surfaces de contact mutuel (13, 15 ; 20, 21 ; 28, 29 ; 34, 35 ; 36, 37 ; 38, 39 ; 40, 41 ; 43, 44 ; 46, 47 ; 49, 50 ; 51, 52 ; 53, 54) est inférieure à la moitié de l'étendue (H4) de l'orifice (7).

2. Ensemble (1) de manivelle selon la revendication 1, **caractérisé en ce que** les surfaces de contact mutuel (13, 15 ; 20, 21 ; 28, 29 ; 34, 35 ; 36, 37 ; 38, 39 ; 40, 41 ; 43, 44 ; 46, 47 ; 49, 50 , 51, 52 ; 53, 54) présentent une progression globale en pente par rapport à l'axe (X).

3. Ensemble (1) de manivelle selon la revendication 1 ou 2, **caractérisé en ce que**, dans la direction de l'axe (X), l'étendue (H1, H2) desdites surfaces de contact mutuel (13, 15 ; 20, 21 ; 28, 29 ; 34, 35 ; 36, 37 ; 38, 39 ; 40, 41 ; 43, 44 ; 46, 47 ; 49, 50 ; 51, 52 ; 53, 54) est inférieure à un cinquième de l'étendue (H4) de l'orifice (7).

4. Ensemble (1) de manivelle selon l'une des revendications précédentes, **caractérisé en ce que**, dans la direction de l'axe (X), l'étendue (H1, H2) desdites surfaces de contact mutuel (13, 15 ; 20, 21 ; 28, 29 ; 34, 35 ; 36, 37 , 38, 39 ; 40, 41 ; 43, 44 ; 46, 47 ; 49, 50 ; 51, 52 ; 53, 54) est comprise entre un pas (P) d'un filetage intérieur (10) de l'orifice (7) et deux fois le pas (P).

5. Ensemble (1) de manivelle selon l'une des revendications précédentes, **caractérisé en ce que** l'élément de renforcement (3) possède un plus grand module d'élasticité que la manivelle (2).

6. Ensemble (1) de manivelle selon l'une des revendications précédentes, **caractérisé en ce que** l'élément de renforcement (3) est réalisé en un matériau sélectionné dans le groupe comprenant l'acier, un alliage de titane et un alliage d'aluminium.

7. Ensemble (1) de manivelle selon l'une des revendications précédentes, **caractérisé en ce que** les surfaces de contact mutuel (13, 15 ; 40, 41 ; 46, 47 ; 49, 50) sont des surfaces coniques.

8. Ensemble (1) de manivelle selon la revendication 7, **caractérisé en ce que** la génératrice des surfaces de contact mutuel coniques (13, 15 ; 40, 41 ; 46, 47 , 49, 50) est en pente d'un angle (α) compris entre 5° et 45° par rapport à un plan perpendiculaire à l'axe (X).

9. Ensemble (1) de manivelle selon l'une quelconque des revendications 1 à 6, **caractérisé en ce que** les surfaces de contact mutuel (20, 21 ; 28, 29) sont des surfaces de révolution ayant une génératrice curvilinéaire avec au moins un point d'inflexion.

10. Ensemble (1) de manivelle selon la revendication 9, **caractérisé en ce que** la génératrice curvilinéaire (20, 21) possède au moins deux points d'inflexion.

11. Ensemble (1) de manivelle selon l'une quelconque des revendications 1 à 6, **caractérisé en ce que** les surfaces de contact mutuel (38, 39 ; 43, 44) sont des surfaces de révolution ayant une génératrice échelonnée.

12. Ensemble (1) de manivelle selon l'une quelconque des revendications 1 à 6, **caractérisé en ce que** les surfaces de contact mutuel (34, 35 ; 36, 37) sont des surfaces de révolution ayant une génératrice en forme d'arc de cercle.

13. Ensemble (1) de manivelle selon l'une quelconque des revendications 1 à 6, **caractérisé en ce que** les surfaces de contact mutuel (53, 54) sont des surfaces à facettes multiples.

14. Ensemble (1) de manivelle selon la revendication 13, **caractérisé en ce que** les surfaces de contact mutuel (53, 54) sont des surfaces en forme de pyramide tronquée.

15. Ensemble (1) de manivelle selon l'une quelconque des revendications précédentes, **caractérisé en ce que** la surface de contact (13, ; 20 ; 28 ; 34 ; 36 ; 38 ; 49 ; 51 ; 53) de l'élément de renforcement (3) converge globalement en direction de la manivelle (2), et la surface de contact (15 ; 21 ; 29 ; 35 ; 37 ; 39 ; 50 ; 52 ; 54) de la manivelle (2) diverge globalement en direction de l'élément de renforcement (3).

16. Ensemble (1) de manivelle selon l'une quelconque des revendications 1 à 14, **caractérisé en ce que** la surface de contact (40 ; 43 ; 46) de l'élément de renforcement (3) diverge globalement en direction de la manivelle (2), et la surface de contact (41 ; 44 ; 47) de la manivelle (2) converge globalement en direction de l'élément de renforcement (3).

17. Ensemble (1) de manivelle selon l'une quelconque des revendications précédentes, **caractérisé en ce que** la manivelle (2) comprend un siège en creux (14) pour loger l'élément de renforcement (3).

18. Ensemble (1) de manivelle selon l'une quelconque des revendications 1 à 16, **caractérisé en ce que** la manivelle (2) comprend un siège en saillie (42) pour loger l'élément de renforcement (3).

19. Ensemble (1) de manivelle selon l'une quelconque des revendications précédentes, **caractérisé par** une contrainte mécanique entre la manivelle (2) et l'élément de renforcement (3).

20. Ensemble (1) de manivelle selon la revendication 19, **caractérisé en ce que** ladite contrainte mécanique comprend un matage (45).

21. Ensemble (1) de manivelle selon la revendication 20, **caractérisé en ce que** la manivelle (2) comprend un siège en creux (14) pour loger l'élément de renforcement (3), et ladite contrainte mécanique comprend un matage (45) de la manivelle (2) ou de l'élément de renforcement (3) autour du siège (14) pour l'élément de renforcement (3).

22. Ensemble (1) de manivelle selon la revendication 20, **caractérisé en ce que** la manivelle (2) comprend un siège en saillie (42) pour loger l'élément de renforcement (3), et ladite contrainte mécanique comprend un matage (45) de la manivelle (2) ou de l'élément de renforcement (3) autour dudit siège (42).

23. Ensemble (1) de manivelle selon la revendication 19, **caractérisé en ce que** la manivelle (2) est réalisée en un matériau composite, et ladite contrainte mécanique est obtenue par co-moulage de l'élément de renforcement (3) dans la manivelle (2).

24. Ensemble (1) de manivelle selon l'une quelconque des revendications précédentes, **caractérisé en ce que** les surfaces de contact mutuel (49, 50 ; 51, 52) entre la manivelle (2) et l'élément de renforcement (3) ont une étendue différente à différentes positions angulaires autour de l'axe (X).

25. Ensemble (1) de manivelle selon la revendication 24, **caractérisé en ce que** les surfaces de contact mutuel (49, 50) entre la manivelle (2) et l'élément de renforcement (3) sont des surfaces excentriques par rapport à l'orifice (7).

26. Ensemble (1) de manivelle selon la revendication 25, **caractérisé en ce que** l'axe (X1) des surfaces de contact mutuel (49, 50) est parallèle à l'axe (X) et définit, avec l'axe (X), un plan (ε) en pente d'un angle (β) compris entre 30° et 70° par rapport à un axe médian longitudinal (Y) de la manivelle (2).

27. Ensemble (1) de manivelle selon la revendication 24, **caractérisé en ce que** les surfaces de contact mutuel (51, 52) de la manivelle (2) et de l'élément de renforcement (3) ont une pente différente (α', α") à différentes positions angulaires autour de l'axe (X).

28. Manivelle (2) de bicyclette ayant une première extrémité (4) pour l'accouplement à un axe du jeu de pédalier et une seconde extrémité (5) pour l'accouplement à une pédale, au moins l'une de ladite première extrémité (4) et de ladite seconde extrémité (5) comportant un orifice (7) s'étendant depuis un côté (8) de la manivelle (2) pour l'accouplement à un axe (100), respectivement de la pédale ou du jeu de pédalier, et comportant, à proximité dudit côté (8), une surface (15 ; 21 ; 29 ; 35 ; 37 ; 39 ; 41 ; 44 ; 47 ; 50 ; 52 ; 54) conçue pour entrer en contact avec un élément de renforcement, ladite surface de contact n'étant pas totalement contenue dans un plan perpendiculaire à un axe (X) de l'orifice (7) et ayant une étendue (H1), dans la direction de l'axe (X), inférieure à la moitié de l'étendue (H4) de l'orifice (7).

29. Manivelle (2) selon la revendication 28, **caractérisée en ce que** la surface de contact (15 ; 21 ; 29 ; 35 ; 37 ; 39 ; 47 ; 50 ; 52 ; 54) définit un siège en creux (14) dans la manivelle (2).

30. Manivelle selon la revendication 28, **caractérisée en ce que** la surface de contact (41 ; 44) définit une saillie (42) dans la manivelle (2).

31. Manivelle (2) selon l'une quelconque des revendications 28 à 30, **caractérisée en ce que** la surface de contact (15 ; 21 ; 29 ; 35 ; 37 ; 39 ; 41 ; 44 ; 47 ; 50) est une surface de révolution.

32. Manivelle (2) selon la revendication 31, **caractérisée en ce que** la surface de révolution est une surface conique (15 ; 41 , 47 ; 50).

33. Manivelle (2) selon la revendication 31, **caractérisée en ce que** la surface de révolution (21, 29) possède une génératrice curvilinéaire avec au moins un point d'inflexion

34. Manivelle (2) selon la revendication 31, **caractérisée en ce que** la surface de révolution (39, 44) possède une génératrice échelonnée.

35. Manivelle (2) selon la revendication 31, **caractérisée en ce que** la surface de révolution (35, 37) possède une génératrice en forme d'arc de cercle.

36. Manivelle (2) selon l'une quelconque des revendications 28 à 30, **caractérisée en ce que** la surface de contact (54) est à facettes multiples.

37. Manivelle (2) selon la revendication 36, **caractérisée en ce que** la surface de contact (54) est en forme de pyramide tronquée.

38. Manivelle (2) selon l'une quelconque des revendications 28 à 37, **caractérisée en ce que** la surface de contact (50 ; 52) possède une étendue différente à différentes positions angulaires autour de l'axe (X).

39. Manivelle (2) selon la revendication 38, **caractérisée en ce que** la surface de contact (50) est une surface excentrique par rapport à l'orifice (7).

40. Manivelle (2) selon la revendication 38, **caractérisée en ce que** la surface de contact (52) possède une pente différente (α', α") à différentes positions angulaires autour de l'axe (X).

41. Élément de renforcement pour une manivelle de bicyclette, comprenant un orifice conçu pour permettre le passage d'un axe (100), respectivement de la pédale ou du jeu de pédalier, une partie (12) conçue pour recevoir une partie de butée (103) dudit axe (100) reposant sur elle, et une surface de contact (13, ; 20 ; 28 ; 34 ; 36 ; 38 ; 40 ; 43 ; 46 ; 49 ; 51 ; 53) non totalement contenue dans un plan perpendiculaire à un axe (X) de l'orifice (7), ladite surface étant conçue pour entrer en contact avec la manivelle ou le jeu de pédalier, respectivement, **caractérisé en ce que** l'étendue (H1, H2) de ladite surface de contact est inférieure à la moitié de l'étendue (H4) de l'orifice (7) de la manivelle, le cas échéant.

42. Élément de renforcement selon la revendication 41, **caractérisé en ce que** la partie de butée (12) comprend une surface de butée (12) essentiellement opposée à la surface de contact (13 ; 20 ; 28 ; 34 ; 36 ; 38 ; 40 ; 43 , 46 ; 49 ; 51 ; 53),

43. Élément de renforcement selon la revendication 41 ou 42, **caractérisé en ce que** la surface de contact (13 ; 40 ; 46 ; 49) est conique.

44. Élément de renforcement selon la revendication 41 ou 42, caxactéa-isé en ce que la surface de contact est une surface de révolution (20 ; 28) ayant une génératrice curvilinéaire avec au moins un point d'inflexion.

45. Élément de renforcement selon la revendication 41 ou 42, **caractérisé en ce que** la surface de contact est une surface de révolution (34 ; 36) ayant une génératrice en forme d'arc de cercle.

46. Élément de renforcement selon la revendication 41 ou 42, **caractérisé en ce que** la surface de contact est une surface de révolution ayant une génératrice échelonnée (39 ; 43).

47. Élément de renforcement selon la revendication 41 ou 42, **caractérisé en ce que** la surface de contact (53) est à facettes multiples.

48. Élément de renforcement selon la revendication 47, **caractérisé en ce que** la surface de contact est une surface en forme de pyramide tronquée (53).

49. Élément de renforcement selon l'une quelconque des revendications 41 à 48, **caractérisé en ce que** la surface de contact (49) est excentrique par rapport à l'orifice (7).
